# EUROPÄISCHE PATENTSCHRIFT

(11) **EP 3 363 291 B1**
(45) Veröffentlichungstag und Bekanntmachung des Hinweises auf die Patenterteilung: **30.09.2020**
(21) Anmeldenummer: 18154355.4
(22) Anmeldetag: 31.01.2018
(51) Int. Cl.: A21C 7/00, A21C 14/00

(54) **DOUGH PROCESSING SYSTEM**
TEIGBEARBEITUNGSANLAGE
INSTALLATION DE TRAITEMENT DE PÂTE

(30) Priorität: 20.02.2017 DE 102017202706
(43) Veröffentlichungstag der Anmeldung: 22.08.2018
(73) Patentinhaber: Werner & Pfleiderer Lebensmitteltechnik GmbH, 91550 Dinkelsbühl (DE)
(72) Erfinder: Meier, Alexander, 91602 Dürrwangen (DE); Breimann, Roland, 91616 Neusitz (DE)
(74) Vertreter: Rau, Schneck & Hübner Patentanwälte Rechtsanwälte PartGmbB

(56) Entgegenhaltungen:
- DE-A1- 2 939 818
- DE-A1- 3 320 210
- GB-A- 2 237 177
- JP-U- S55 110 086
- KR-A- 20120 081 852
- US-A- 3 733 058
- US-A- 3 829 593

## Beschreibung

Die vorliegende Patentanmeldung nimmt die Priorität der deutschen Patentanmeldung DE 10 2017 202 706.1 in Anspruch, deren Inhalt durch Bezugnahme hierin aufgenommen wird.

Die Erfindung betrifft eine Teig-Bearbeitungsanlage mit einer Übergabevorrichtung für Teiglinge für deren Übergabe von einer Teig-Portioniereinrichtung zu einer Teiglings-Wirkeinrichtung gemäß dem Oberbegriff des Anspruchs 1.

Bekanntermaßen weisen solche Übergabevorrichtungen eine rotierend angetriebene Abwerfwalze - oft auch als Lösewalze oder Lösewelle bezeichnet - für die Ablösung des Teiglings von der abgebenden Bearbeitungsstation sowie einen der Abwerfwalze zugeordneten Abstreifer zur Unterstützung der Ablösung des Teiglings von der Abwerfwalze auf.

Im Stand der Technik sind solche Übergabevorrichtungen für Teiglinge beschrieben. Problematisch ist dabei die Tendenz, dass die Teiglinge, insbesondere wenn sie aus weichem, klebrigem Teig bestehen, trotz Abstreifer die Abwerfwalze verkleben. Dies beeinträchtigt die zuverlässige, störungsfreie Funktion der Übergabevorrichtung.

Eine aus der US 3,733,058 bekannte, gattungsgemäße Portionier- und Schleifvorrichtung umfasst einen Teigtrichter, der zu einem Stauraum führt. Im Stauraum ist ein Schieber angeordnet, der Teig aus dem Stauraum in Aufnahmeöffnungen in einer drehbaren Trommel schiebt. Über die Länge der Trommel verläuft ein Rohr, aus welchem Öl auf eine an dem Umfang der Trommel anliegende Walze tropft. Unterhalb der Walze ist ein federnder Abstreifer angeordnet, welcher die Trommel sauber hält. Abgestreifte Teig- und Ölreste werden durch eine Auffangschale aufgefangen.

Bei einer anderen Ausführungsform ist der Trommel eine Abgabewalze zugeordnet, die ausgeworfene Teigstücke auf ein Förderband führt.

Aus der GB 2 237 177 A ist eine Vorrichtung mit einer Walze bekannt, die in eine Ölwanne eintaucht und Öl auf eine Überführungswalze überführt. Die Überführungswalze liegt an einer Auftragswalze an, die wiederum an einem Teigband anliegt.

Eine in der US 3,829,593 offenbarte Vorrichtung umfasst eine mit Öl getränkte Filzrolle, die die Oberfläche einer Trommel einölt, um ein Anbrennen einer Teigschicht zu verhindern und ein Abwickeln von Backwaren von der Trommel ohne Abstreifmesser oder dergleichen zu ermöglichen. Zum Reinigen der Trommel dient ein Schaber.

Die DE 29 39 818 C2 und DE 33 20 210 C2 zeigen entsprechende Anlagen, bei denen Ölaufbringwalzen am Transportweg von Teigstücken angeordnet sind und bei deren Vorbeilauf Öl auf die Oberfläche der Teigstücke applizieren.

Aus der DE 29 43 088 A1 ist eine Teigteil- und Wirkmaschine mit Schlussbeölung bekannt, bei der die Teiglinge aus Düsen direkt mit Öl besprüht werden.

Die WO 03/051 127 A1 beschreibt eine Vorrichtung zur kontinuierlichen Erzeugung eines Teigbandes.Die DE 10 2008 000 730 A1 beschreibt eine Teigportioniervorrichtung in einem Trichter zur Aufnahme einer Teigmasse.

Die JP S55-110086 U und KR 10-2012-0081852 A sowie CN 2225142 Y offenbaren bekannte Nudel-Herstellmaschinen.

Der Erfindung liegt die Aufgabe zugrunde, eine Übergabevorrichtung für Teiglinge so zu verbessern, dass ein Verkleben der Abwerfwalze wirkungsvoll vermieden wird.

Erfindungsgemäß wird diese Aufgabe durch den Kennzeichnungsteil des Anspruchs 1 gelöst. Die abhängigen Ansprüche beschreiben fakultative Ausführungsformen, die ebenfalls zur Erfindung gehören

Durch diese Beölung wird die Oberfläche der Abwerfwalze weniger haftfähig für den Teig gemacht, sodass die Tendenz zum Verkleben der Abwerfwalze drastisch sinkt. Die Beölungseinrichtung kann eine Einheit aufweisen, mit der mittels Ultraschallvernebelung ein Ölnebel erzeugt wird, der sich auf der Mantelfläche der Abwerfwalze niederschlägt. Die Beölungseinrichtung kann mindestens eine Öl-Sprühdüse aufweisen. Auch eine Mehrzahl derartiger Öl-Sprühdüsen kann vorhanden sein. Die Abwerfwalze kann innerhalb der Übergabevorrichtung sowie innerhalb einer die Teig-Portioniereinrichtung und die Teiglings-Wirkeinrichtung aufweisenden Teigbearbeitungsanlage ausbaubar montiert sein. Die Ausbaubarkeit der Abwerfwalze begünstigt die Reinigung der Walze sowie einer Einbauumgebung von dieser. Insbesondere bei weichen Teigen, die bearbeitet werden, ist dies vorteilhaft. Zudem ist ein Betrieb der vorgeordneten Teig-Portioniereinrichtung sowie der nachgeordneten Teiglings-Wirkeinrichtung auch mit ausgebauter Abwerfwalze gewährleistbar, was insbesondere bei größeren Teigportionen von Vorteil sein kann. Auch eine Totraumzugänglichkeit der Einbauumgebung der Abwerfwalze ist durch deren Ausbaubarkeit erleichtert.

In den abhängigen Ansprüchen sind vorteilhafte Weiterbildungen der Erfindung angegeben. So kann die Beölungseinrichtung mindestens ein mit Abstand von der Abwerfwalze parallel zu deren Rotationsachse verlaufendes Beölungsrohr aufweisen, das über seine Länge verteilt angeordnete Ölaustrittsöffnungen aufweist. Dies ist eine konstruktiv einfache Realisierung der Beölungseinrichtung.

Um die Förderung des Öls zu der Beölungseinrichtung mit möglichst geringem apparativem Aufwand zu bewerkstelligen, ist es von Vorteil, wenn das Beölungsrohr oberhalb der Abwerfwalze angeordnet ist. Das Öl wird dann drucklos über die Ölaustrittsöffnungen abgegeben und tropft gravitationsbedingt auf die Abwerfwalze ab. Es genügt also, das Öl mit einer einfachen Pumpvorrichtung zum Beölungsrohr zu fördern.

Für eine Vergleichmäßigung der derart abgegebenen Ölmenge können gemäß einer weiteren bevorzugten Ausführungsform die Ölaustrittsöffnungen an der der Abwerfwalze abgewandten Oberseite des Beölungsrohrs angeordnet sein. Damit verteilt sich das Öl über die Rohroberfläche, bevor es in Richtung Abwerfwalze abtropft, wodurch sich der gewünschte Egalisierungseffekt einstellt.

In einer alternativen Ausführungsform der Erfindung können die Ölaustrittsöffnungen als Düsen ausgebildet sein, über die das Öl unter Druck auf die Abwerfwalze spürbar ist. Dazu ist zwar eine aufwändigere Pumpeinrichtung notwendig, allerdings lässt sich durch ein dosiertes Sprühen ein noch gleichmäßigerer und besonders dünner Ölfilm auf der Abwerfwalze realisieren, wodurch der Ölbedarf reduziert wird. Dies kann auch vorteilhaft für den Fall sein, dass eine mittelbare Beölung des Teiglings möglichst gering ausfallen soll.

Einer Vereinfachung der Wartung und insbesondere der Reinigungsarbeiten an der Übergabevorrichtung kommt es zugute, wenn das Beölungsrohr lösbar in der Übergabevorrichtung montiert ist. Dann kann es zur regelmäßig notwendigen Reinigung einfach demontiert, gesäubert und wieder eingesetzt werden.

Derselben Zielsetzung dient die Anbindung des Beölungsrohrs an eine Öl-Zufuhrleitung über einen Steckanschluss, wie dies gemäß einer weiteren bevorzugten Ausführungsform der Erfindung vorgesehen ist.

Eine Alternative zu der mit Abstand zur Abwerfwalze angeordnete Beölungseinrichtung ist durch die Realisierung mittels eines ölgetränkten, an der Abwerfwalze anliegenden Übertragungsmediums, etwa in Form eines Gewebes, Filzes oder Vlieses gegeben. Dies hat den Vorteil, dass die mit Öl beaufschlagte Oberfläche der Abwerfwalze genau definierbar ist und weniger Ölnebel in die übrigen Bereiche der backtechnischen Anlage dringen kann.

Gemäß einer Weiterbildung der Erfindung wird die Beölungseinrichtung aus einem Öl-Reservoir über eine Pumpe, Dosier-Pumpe, Dosier-Ventilanordnung oder dergleichen definiert mit Öl versorgt. Auch dies kommt der Effizienz der Beölung zugute.

Eine weitere bevorzugte Ausführungsform sieht vor, dass der Abstreifer mit seiner Abstreifkante über einen Mikrospalt mit einem Abstand zwischen 10 µm und 100 µm, vorzugsweise von 50 µm zur Abwerfwalze positioniert ist. Dieser Mikrospalt unterstützt weiter die gleichmäßige Verteilung des Öls über die Oberfläche der Abwerfwalze.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:
- Fig. 1: eine schematische Seitenansicht einer Teig-Bearbeitungsanlage mit Teig-Teilvorrichtung, Übergabevorrichtung und Wirktrommel,
- Fig. 2: eine schematische Perspektivdarstellung des Bereichs II gemäß Fig. 1,
- Fig. 3: eine Frontalansicht der Übergabevorrichtung aus Pfeilrichtung III gemäß Fig. 1, und
- Fig. 4: eine Seitenansicht der Übergabevorrichtung aus Pfeilrichtung IV gemäß Fig. 3.

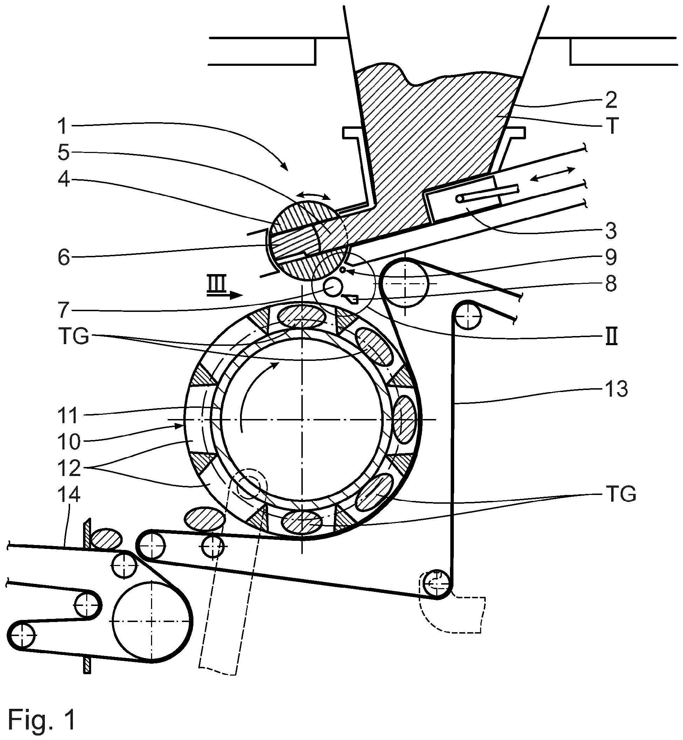

Wie aus Fig. 1 deutlich wird, weist die gezeigte Teig-Bearbeitungsanlage eine übliche Teig-Teilvorrichtung 1 mit einem Vorratstrichter 2 für den Teig T, einem darunter angeordneten Schieber 3 und einer Portioniertrommel 4 auf. Über den Schieber 3 wird eine Teilmenge des Teigs T abgeschert und in eine von einem Auswurfkolben 6 begrenzte Portionierkammer 5 in der Portioniertrommel 4 gefüllt. Durch Drehung der Portioniertrommel 4 entgegen dem Uhrzeigersinn bezogen auf Fig. 1 wird die Portionierkammer 5 in einen nach unten gerichtete Drehstellung verbracht und gleichzeitig der Auswurfkolben 6 in radialer Richtung bewegt, sodass der in der Portionierkammer 5 befindliche Teigling TG nach unten ausgestoßen wird.

Zur Unterstützung der Trennung des Teiglings TG vom Auswurfkolben 6 ist unterhalb der Portioniertrommel 4 neben der Auswurfposition des Teiglings TG eine entgegen dem Uhrzeigersinn bezogen auf Fig. 1 rotierend angetriebene Abwerfwalze 7 angeordnet, deren Rotationsachse R parallel zur Rotationsachse der Portioniertrommel 4 gerichtet ist. Die Abwerfwalze 7 wirkt auf den aus der Portionierkammer 5 austretenden Teigling TG in einer Weise, dass er vom Auswurfkolben 6 abgelöst wird.

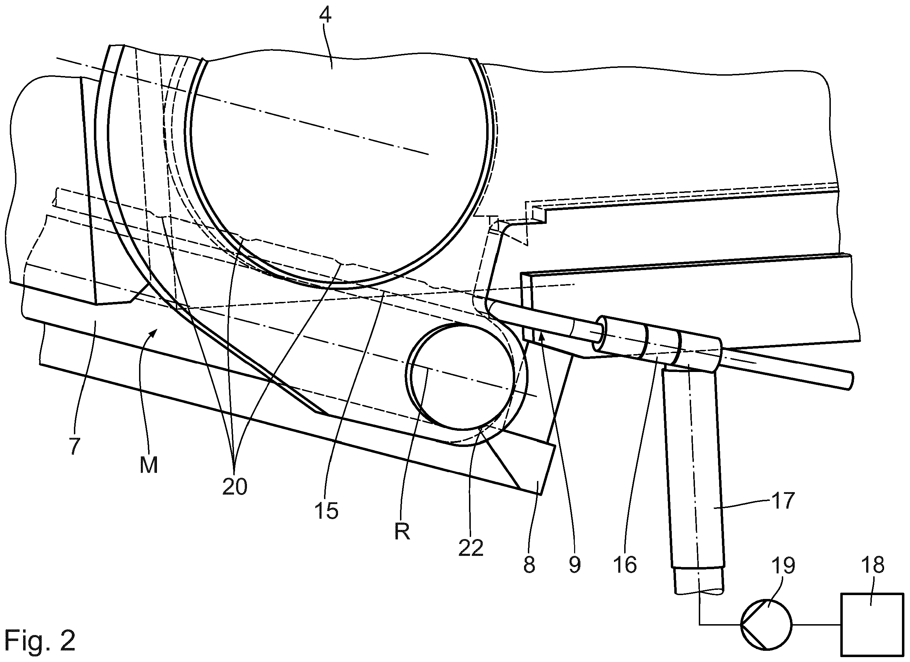

Auf der der Portioniertrommel 4 abgewandten Seite der Abwerfwalze 7 ist parallel zu dieser ein Abstreifer 8 angeordnet, der einem Verkleben der Abwerfwalze 7 entgegenwirkt. Ferner ist oberhalb der Abwerfwalze 7 eine als Ganzes mit 9 bezeichnete Beölungseinrichtung vorgesehen, deren detaillierter Aufbau weiter unten anhand der Fig. 2 bis 4 näher beschrieben wird.

Unterhalb von Portioniertrommel 4 und Abwerfwalze 7 ist die üblich aufgebaute Kammertrommel 10 der Teig-Bearbeitungsanlage angeordnet.

Diese weist eine innere Wirktrommel 11, über ihren Umfang verteilt Wirckammern 12 sowie ein über einen Teilumfang der Kammertrommel 10 laufendes Wirkband 13 auf. In die Wirkkammern 12 fällt jeweils ein Teigling TG nach dem Ablösen von der Portioniertrommel 4. Während der Rotation der Wirktrommel 10 im Uhrzeigersinn bezogen auf Fig. 1 wird jeder Teigling TG in üblicher Weise einer Wirkbehandlung unterzogen und anschließend vereinzelt zueinander über das Ablaufband 14 zur nächsten Bearbeitungsstation transportiert.

Im Folgenden wird nun die Beölungseinrichtung 9 anhand der Fig. 2 bis 4 näher erläutert. Diese weist eine mit Abstand a oberhalb von der Abwerfwalze 7 parallel zu deren Rotationsachse R angeordnetes Beölungsrohr 15 auf, das sich über die gesamte Länge der Abwerfwalze 7 erstreckt und über einen Steckanschluss 16 an eine Öl-Zufuhrleitung 17 angebunden ist. Über diesen Steckanschluss 16 ist das Beölungsrohr 15 mechanisch gehalten und fluidisch über die Öl-Zufuhrleitung 17 an ein schematisch in Fig. 2 angedeutet dargestelltes Ölreservoir 18 angekoppelt. Das darin befindliche Öl wird über eine Dosierpumpe 19 in definierter Menge zum Beölungsrohr 15 gefördert. Letzteres ist aufgrund des Steckanschlusses 16 auch rationell demontierbar, womit beispielsweise Wartungs- und Reinigungsarbeiten schnell durchführbar sind.

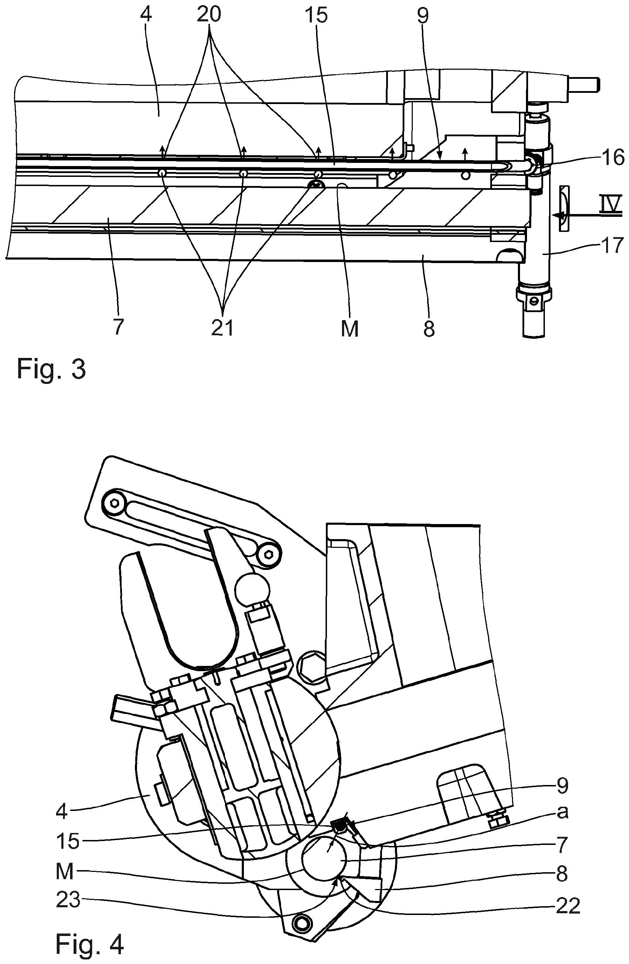

Wie insbesondere aus Fig. 2 und 3 deutlich wird, weist dieses Beölungsrohr 15 über seine Länge verteilt angeordnete Ölaustrittsöffnungen 20 auf, die an der der Abwerfwalze 7 abgewandten Oberseite des Beölungsrohrs 15 darin eingebracht sind. Über diese Ölaustrittsöffnungen 20 wird das von der Dosierpumpe 19 herangeförderte Öl drucklos abgegeben und tropft danach gravitationsbedingt auf die Mantelfläche M Abwerfwalze 7 ab. Entsprechende Tropfen 21 sind in Fig. 3 symbolisch angedeutet. Auf der Abwerfwalze 7 verteilt sich das Öl dann aufgrund seiner Kriechfähigkeit und verhindert, dass sich Teig von den Teiglingen TG daran ansetzt.

Im Zusammenhang mit dem Abstreifer 8, der mit seiner Abstreifkante 22 der Abwerfwalze 7 zugewandt angeordnet ist, ist festzuhalten, dass zwischen der Kante 22 und der Mantelfläche der Abwerfwalze 7 eine Mikrospalt 23 mit einem Maß von beispielsweise 50 µm vorgesehen ist, der damit für eine effiziente Abschabung von Teigmaterial ausreichend klein ist, gleichzeitig aber die Vergleichmäßigung des Ölfilms auf der Abwerfwalze 7 unterstützt.

## Patentansprüche

1. Teig-Bearbeitungsanlage,
- mit einer Teig-Portioniereinrichtung (1),
- mit einer Teiglings-Wirkeinrichtung, und
- mit einer Übergabevorrichtung für die Übergabe des Teiglings (TG) von der Teig-Portionierungseinrichtung (1) zu der Teiglings-Wirkeinrichtung, wobei die Übergabevorrichtung eine rotierend angetriebene Abwerfwalze (7) für die Ablösung des Teiglings (TG) von der Teig-Portioniereinrichtung (1) aufweist, **dadurch gekennzeichnet, dass** die Übergabevorrichtung weiter umfasst:
-- einen der Abwerfwalze (7) zugeordneten Abstreifer (8) zur Unterstützung der Ablösung des Teiglings (TG) von der Abwerfwalze (7), und
-- eine der Abwerfwalze (7) zugeordnete Beölungseinrichtung (9) zum Ausbringen von Öl auf die Mantelfläche (M) der Abwerfwalze (7).

2. Teig-Bearbeitungsanlage nach Anspruch 1, **dadurch gekennzeichnet, dass** die Beölungseinrichtung (9) mindestens ein mit Abstand von der Abwerfwalze (7) parallel zu deren Rotationsachse (R) verlaufendes Beölungsrohr (15) aufweist, das über seine Länge verteilt angeordnete Ölaustrittsöffnungen (20) aufweist.

3. Teig-Bearbeitungsanlage nach Anspruch 2, **dadurch gekennzeichnet, dass** das Beölungsrohr (15) oberhalb der Abwerfwalze (7) angeordnet ist, wobei Öl imstande ist, drucklos über die Ölaustrittsöffnungen (20) auszutreten und gravitationsbedingt auf die Abwerfwalze (7) abzutropfen.

4. Teig-Bearbeitungsanlage nach Anspruch 3, **dadurch gekennzeichnet, dass** die Ölaustrittsöffnungen (20) an der der Abwerfwalze (7) abgewandten Oberseite des Beölungsrohrs (15) angeordnet sind.

5. Teig-Bearbeitungsanlage nach Anspruch 2, **dadurch gekennzeichnet, dass** die Ölaustrittsöffnungen als Düsen ausgebildet sind, über die Öl unter Druck auf die Abwerfwalze (7) sprühbar ist.

6. Teig-Bearbeitungsanlage nach einem der Ansprüche 2 bis 5, **dadurch gekennzeichnet, dass** das Beölungsrohr (15) lösbar in der Übergabevorrichtung montiert ist.

7. Teig-Bearbeitungsanlage nach Anspruch 6, **dadurch gekennzeichnet, dass** das Beölungsrohr (15) über einen Steckanschluss (16) an eine Öl-Zufuhrleitung (17) von einem Öl-Reservoir (18) angebunden ist.

8. Teig-Bearbeitungsanlage nach Anspruch 1, **dadurch gekennzeichnet, dass** die Beölungseinrichtung (9) durch ein Öl getränktes, an der Abwerfwalze (7) anliegendes Übertragungsmedium gebildet ist.

9. Teig-Bearbeitungsanlage nach einem der vorgenannten Ansprüche, **dadurch gekennzeichnet, dass** die Beölungseinrichtung (9) aus einem Öl-Reservoir (18) über eine Pumpe, Dosierpumpe (19) oder Dosier-Ventilanordnung definiert mit Öl versorgt ist.

10. Teig-Bearbeitungsanlage nach einem der vorgenannten Ansprüche, **dadurch gekennzeichnet, dass** der Abstreifer (8) mit seiner Abstreifkante (22) über einen Mikrospalt (23) mit einem Abstand zwischen 10 µm und 100 µm, vorzugsweise von 50 µm, von der Abwerfwalze (7) positioniert ist.

## Claims

1. Dough processing system,
- with a dough portioning device (1),
- with a dough kneading device, and
- with a transfer apparatus for transfer the dough piece (TG) from the dough portioning device (1) to the dough kneading device, wherein the transfer device comprises a rotating dropping roller (7) for releasing the dough piece (TG) from the dough portioning device (1),
**characterized in that** the transfer device further comprises:
-- a scraper (8) associated with the dropping roller (7) to support the release of the dough piece (TG) from the dropping roller (7), and
-- an oiling device (9), which is associated with the dropping roller (7), for applying oil on the outside surface (M) of the dropping roller (7).

2. Dough processing system according to Claim 1, **characterized in that** the oiling device (9) comprises at least one oiling pipe (15), which extends at a distance parallel to the rotational axis (R) of the dropping roller (7) and has oil outlet openings (20) distributed across its length.

3. Dough processing system according to Claim 2, **characterized in that** the oiling pipe (15) is arranged above the dropping roller (7) with oil being capable of delivering unpressurized via the oil outlet openings (20) and dripping contingent on gravitation on the dropping roller (7).

4. Dough processing system according to Claim 3, **characterized in that** the oil outlet openings (20) are arranged at the upper side of the oiling pipe (15) facing away from the dropping roller (7).

5. Dough processing system according to Claim 2, **characterized in that** the oil outlet openings are configured in the form of nozzles, by means of which the oil can be sprayed under pressure on the dropping roller (7).

6. Dough processing system according to any one of claims 2 to 5, **characterized in that** the oiling pipe (15) is mounted in detachable manner in the transfer apparatus.

7. Dough processing system according to Claim 6, **characterized in that** the oiling pipe (15) is connected via a plug connection (16) to an oil supply line (17) of an oil reservoir (18).

8. Dough processing system according to Claim 1, **characterized in that** the oiling device (9) is formed by a transfer medium attached to the dropping roller (7).

9. Dough processing system according to any one of the preceding claims, **characterized in that** the oiling device (9) is definitely supplied with oil from an oil reservoir (18) via a pump, dosing pump (19) or dosing-valve arrangement.

10. Dough processing system according to any one of the preceding claims, **characterized in that** the scraper edge (22) of the scraper (8) is positioned above a micro gap (23) at a distance of between 10 µm and 100 µm, preferably 50 µm, to the dropping roller (7).

## Revendications

1. Installation de traitement de pâte,
- avec un dispositif de portionnage de pâte (1),
- avec un dispositif de pétrissage de pâtons, et
- avec un dispositif de remise pour la remise du pâton (TG) du dispositif de portionnage de pâte (1) au dispositif de pétrissage de pâtons, dans laquelle le dispositif de remise présente un rouleau d'éjection (7) entraîné de manière à pouvoir tourner pour le détachement du pâton (TG) du dispositif de portionnage de pâte (1),
**caractérisée en ce que** le dispositif de remise comporte en outre :
-- un racleur (8) associé au rouleau d'éjection (7) pour le soutien du détachement du pâton (TG) du rouleau d'éjection (7), et
-- un dispositif de graissage (9) associé au rouleau d'éjection (7) pour la répartition d'huile sur la surface enveloppe (M) du rouleau d'éjection (7).

2. Installation de traitement de pâte selon la revendication 1, **caractérisée en ce que** le dispositif de graissage (9) présente au moins un tube de graissage (15) s'étendant à distance du rouleau d'éjection (7) parallèlement à son axe de rotation (R) qui présente des ouvertures de sortie d'huile (20) agencées en étant distribuées sur sa longueur.

3. Installation de traitement de pâte selon la revendication 2, **caractérisée en ce que** le tube de graissage (15) est agencé au-dessus du rouleau d'éjection (7), dans laquelle de l'huile est en mesure de sortir sans pression par les ouvertures de sortie d'huile (20) et de goutter du fait de la gravité sur le rouleau d'éjection (7).

4. Installation de traitement de pâte selon la revendication 3, **caractérisée en ce que** les ouvertures de sortie d'huile (20) sont agencées au niveau du côté supérieur, éloigné du rouleau d'éjection (7), du tube de graissage (15).

5. Installation de traitement de pâte selon la revendication 2, **caractérisée en ce que** les ouvertures de sortie d'huile sont réalisées sous forme de buses, par lesquelles de l'huile peut être pulvérisée sous pression sur le rouleau d'éjection (7).

6. Installation de traitement de pâte selon l'une des revendications 2 à 5, **caractérisée en ce que** le tube de graissage (15) est monté de manière détachable dans le dispositif de remise.

7. Installation de traitement de pâte selon la revendication 6, **caractérisée en ce que** le tube de graissage (15) est lié par un raccord d'enfichage (16) à une conduite d'amenée d'huile (17) d'un réservoir d'huile (18).

8. Installation de traitement de pâte selon la revendication 1, **caractérisée en ce que** le dispositif de graissage (9) est formé par un milieu de transmission imprégné d'huile, reposant contre le rouleau d'éjection (7).

9. Installation de traitement de pâte selon l'une des revendications précédentes, **caractérisée en ce que** le dispositif de graissage (9) est alimenté en huile à partir d'un réservoir d'huile (18) par une pompe, une pompe de dosage (19) ou un agencement de soupape de dosage de manière définie.

10. Installation de traitement de pâte selon l'une des revendications précédentes, **caractérisée en ce que** le racleur (8) est positionné avec son arête de raclage (22) au-dessus d'une microfente (23) à une distance entre 10 µm et 100 µm, de préférence de 50 µm, du rouleau d'éjection (7).
